# EUROPEAN PATENT APPLICATION

(11) **EP 4 306 291 A1**
(43) Date of publication of application: **17.01.2024**
(21) Application number: 23182574.6
(22) Date of filing: 30.06.2023
(51) Int. Cl.: B29C 48/18, B32B 27/12, B32B 27/32, B29D 7/01, B60J 11/00, B65D 65/02

(54) **POLYMERIC FILM FOR COVERING CARS**

(30) Priority: 30.06.2022 IT 202200013846
(71) Applicant: Industria Termoplastica Pavese S.p.A., 27040 Bosnasco (Pavia) (IT)
(72) Inventor: CENTONZE, Massimo, 20054 Segrate (Milano) (IT); LANATI, Simonetta, Mornico Losana (Pavia) (IT)
(74) Representative: Rossi, Ugo

(57) **Abstract**

The invention relates to a transparent film suitable to be integrated into the protective covers of cars, generally used to protect the surface of cars even under severe environmental conditions, such as for example very low temperatures, snow, hail, wind, intense and prolonged solar irradiation. In particular, the invention refers to a transparent polymeric film particularly suitable for protecting the glass parts of s, such as windscreens, windows and rear window, this polymeric film being provided with high mechanical strengths against shocks and stresses even under conditions of very low temperatures.

## Description

### SCOPE OF APPLICATION

The present invention relates to a transparent film suitable to be integrated into the protective covers of cars, which are generally used to protect the surface of the cars even under severe environmental conditions, such as for example very low temperatures, snow, hail, wind, intense and prolonged solar irradiation.

In particular, the invention refers to a transparent polymeric film particularly suitable to protect the glass parts of cars, such as windscreens, windows and rear window, this polymeric film being provided with high mechanical strengths against lacerations, shocks and stresses even under conditions of very low temperatures, even below -10°C.

### BACKGROUND OF THE INVENTION

It is known that new cars during their transport between two distant places are typically subject to a wide variety of environmental conditions, which can severely damage the finish of their body and glass parts (windscreen, windows and rear window). In fact, during transport the vehicle can be exposed to contaminants or corrosive substances, such as for example smoke and soot from fires, bird droppings, sand, chips. In addition, the harmful action exerted by solar ultraviolet radiation on the paint of the body, as well as any shocks and abrasions caused by personnel during the transport and delivery of vehicles, cannot be neglected.

These inconveniences can result in the customer being delivered a new vehicle with a ruined appearance, and make unwanted and often expensive repairs necessary. Consequently, to protect vehicles both during their stay in the storage warehouses and during their transport on car carrier trailers between places at a considerable distance, integral covers have been developed and perfected over time, which completely wrap and isolate the surface of the car from the external environment.

These new protective covers for cars are conventionally made of a material consisting of polypropylene spunbond (PP), which is a nonwoven fabric composed entirely of polypropylene. Spunbond (PP) is a nonwoven fabric composed of continuous filaments of homopolymeric polypropylene, arranged randomly and welded thermally by a calendering process or Spunlaid thermobonded method.

Patent US 6,099,067 describes a cover formed by a flexible base layer that is custom structured and assembled to fit closely to the particular type of vehicle on which it is intended to be used: one type of material suitable for this base layer is spunbonded polypropylene. Alternative materials include a polyurethane-backed polyester mesh that provides a stretch for a tight fit to the vehicle, an oxford cloth that is a highly durable, abrasion-resistant, densely woven nylon, or a lightweight, thin nylon liner with a polyethylene liner. The cover described in US 6,099,067 also includes transparent layers for car windows. For these transparent layers, a transparent plastic material is used, which is obtained from a roll of polyethylene film with a thickness of 5 millimetres. Sewing is the preferred method for joining the transparent layers suitable for the windows to the rest of the protective cover.

US 5,845,958 discloses a protective cover for the transport of vehicles made of a nonwoven synthetic film permeable to steam and impermeable to water. In particular, the preferred material for the cover is TYVEK^{®} by DuPont, consisting of high density polyethylene fibres. In one embodiment, the front panel and the rear panel of the protective cover may be made with translucent panels. The transparent panels may be portions of the sheet material that have been rendered transparent by a heat treatment, or the panels may be sections of a transparent or translucent material that have been sewn into the cover, or have been taped, thermally bonded, or radio frequency welded into the cover. For example, the translucent panels can be made by radiofrequency welding a second layer of the same high density polyethylene comprising the cover material onto the portions of the cover where translucency is desired, so that the cover material remains 100% highly recyclable high density polyethylene.

However, the protective covers in polypropylene spunbond described in the prior art have been found to be deficient as to the adequate protection of the surface of the cars, especially in cases where the environmental conditions of temperature and humidity are prohibitive for a prolonged time. In fact, the cars can, in some cases, be parked outdoors in the storage yards for many months, or be transported on car carrier trailers and travel for thousands of kilometres at high speeds, of the order of 100 km/h. This type of transport can deteriorate the conventional PP spunbond covers, especially in places characterized by harsh winters, such as for example Northern Europe, Russia, Canada, etc. In fact, the protective covers remain covered by snow and ice for a long time, therefore subjected to very low temperatures, even below -20°C: this entails the risk of breaking the cover due to the physiological weakening of the PP spunbond under the effect of stresses or shocks.

In addition, another technical problem is related to the fact that the car covers do not have to be uniform, but require transparent portions at the glass parts (windows, windscreen, rear window), as visibility must be guaranteed to a driver during the short movements of the car inside the warehouses, before their sale. In practice, the transparency of some portions of the protective cover is necessary to drive the car without having to remove the cover itself.

The transparent PP films inserted in the protective PP spunbond covers for cars that are traditionally used are inadequate if subjected to winter temperatures below -15°C, since at those temperatures the glass transition temperature (Tg) of the polymer used comes into play, with the risk that the polymeric film becomes brittle and therefore cannot mechanically withstand stresses and shocks. There is therefore a real risk of a breaking the protective cover.

In light of the possible drawbacks mentioned above, the need has been felt to make available to the automotive sector new protective covers equipped with polymeric films capable of mechanically withstanding stresses and shocks that occur at very low temperatures, generally below -15°C.

A first object of the present invention is therefore to make polymeric films provided with high mechanical strength to the shocks at very low temperatures, even of the order of -20°/-25°C, so that the protective cover does not break even under the effect of strong stresses.

Another object of the present invention is to make polymeric films provided with high transparency, and therefore suitable to be placed on the glass parts of the new cars, and at the same time have the additional advantage of being able to be easily incorporated by welding in the rest of the protective cover, which is generally constituted by PP spunbound.

The Applicant has devised, tested and embodied the present invention to overcome the shortcomings of the state of the art and to obtain these and other purposes and advantages.

### DISCLOSURE OF THE INVENTION

The present invention is expressed and characterized in the independent claims, while the dependent claims set forth other preferred and non-essential features of the present invention, or variants of the main solution idea.

A first object of the present invention is a transparent multilayer polymeric film suitable to be integrated into a protective cover for cars, said polymeric film comprising:
- skin layers comprising one or more of the following plastic materials: linear copolymers of ethylene with a density between 0.850 and 0.960 g/cm³; copolymers of ethylene with polar monomers;
- one or more central layers (core layers) comprising at least one polyethylene with density between 0.850 and 0.915 g/cm³ (VLDPE) and/or a copolymer of ethylene with polar monomers, said copolymer having a glass transition temperature lower than -15°C;
said polymeric film having a total thickness lower than 200 µm and high transparency with Haze values lower than 40%.

As known to those skilled in the art, the glass transition temperature (Tg) represents the temperature value below which an amorphous polymeric material behaves as a glassy solid. The glass transition temperature of a polymer depends on each parameter that may affect the mobility of the polymer chain (substituent groups on the backbone, presence of double bonds in the backbone) or on the free volume (average molecular mass).

At temperatures lower than its Tg, the regions where the polymer is amorphous are in the glassy state and the molecules therefore have little mobility: the only allowed motion is a weak vibrational motion, therefore the polymer is hard, rigid and brittle. If the polymer is heated to a temperature above the glass transition temperature, the molecules can begin to move and so the polymer is in a gummy state and exhibits softness and flexibility.

The Applicant has made a multilayer film which, due to its internal polymeric structure, i.e. the composition of the central layers and of the external layers of the film, is characterized both by a high transparency and by a high mechanical strength to stresses/shocks at very low temperatures, lower than 15°C below zero.

The multilayer polymeric film of the present invention is transparent and its external layers are not adhesive, not being able to adhere stably to the objects they coat.

The degree of transparency of a polymeric film can be measured using ASTM D-1003, which is a standard test method used to evaluate the transmission of light through plastic materials with a defined thickness of the sample. This ASTM D-1003 test method provides opacity (Haze) values of the polymeric film: the lower the Haze value, the greater the transparency of the film.

The multilayer polymeric film of the present invention is characterized by Haze values lower than 40%, preferably lower than 35%. This is an essential technical feature of the claimed multilayer film, as its use for coating glass parts of cars necessarily requires high transparency.

Thanks to the specific properties reported above, the multilayer polymeric films in accordance with the present invention are particularly suitable to be used for coating the glass parts (windows, windscreen, rear window) of new cars, in order to protect them during their parking for long periods outdoors, or during their transport between distant places on car carrier trailers.

As indicated above, the multilayer polymeric film of the present invention comprises in its central layers at least one copolymer having a glass transition temperature lower than -15°C: this allows to avoid the brittleness and possible breakage of the multilayer film, even when the protective cover of the vehicle is covered by snow and ice for long periods in regions with a harsh winter climate (Northern Europe, Canada, Russia, etc.).

A further advantage of the multilayer polymeric films of the present invention is related to the fact that they can be easily integrated with the rest of the automotive protective cover, generally consisting of polypropylene spunbond, as explained in the paragraphs relating to the state of the art. Consequently, the polymeric films of the invention have a high propensity to be welded with PP spunbond fabrics, in order to join them with the rest of the protective cover firmly and tenaciously. This joining preferably takes place with heat sealing and for this to be effective it is necessary that the polymeric structure of the transparent multilayer film is highly compatible with the PP nonwoven fabric. This results in a protective cover for cars provided with high flexibility and mechanical strength against severe environmental conditions.

A second object of the present invention is therefore a protective cover for cars comprising one or more transparent multilayer polymeric films having external layers (skin layers) and central layers (core layers) as defined above, said polymeric films being integrated into the protective cover so as to overlap the glass parts of the cars.

A further object of the present invention is the use of one or more multilayer polymeric films, as defined above, for the manufacture of protective covers for cars.

### DETAILED DESCRIPTION OF THE INVENTION

As indicated above, the external layers (skin layers) of the multilayer film according to the present invention may consist of a linear copolymer of ethylene having a density between 0.850 and 0.960 g/cm³. It is a non-polar linear copolymer, which is prepared by copolymerization of the ethylene with one or more non-polar comonomers selected from butene, hexene, octene.

A catalyst based on metallocene compounds is preferably employed during this polymerization reaction. This type of catalyst makes it possible to obtain a final copolymer with a more linear chain, from which a particularly transparent film can be obtained and provided with greater weldability with films consisting of polypropylene spunbond.

According to an alternative embodiment of the invention, the external layers of the multilayer film may also consist of copolymers of ethylene with monomers provided with polarity in their chemical structure. These polar copolymers of ethylene are preferably ethylene vinyl acetate (EVA), ethylene methyl acrylate (EMA), ethylene butyl acrylate (EBA), ethylene acrylic acid (EAA), ethylene methacrylic acid (EMAA).

The aforementioned polar copolymers of ethylene are particularly soft due to their structure, which is the higher the more the comonomer content is. They also have the advantage of being perfectly compatible with the polypropylene of the spunbond fabric.

According to a particularly preferred embodiment of the present invention, the external layers of the multilayer film consist of a linear copolymer of ethylene having a density between 0.900 and 0.930 g/cm³, which is advantageously produced in a polymerization reactor in the presence of a metallocene-type catalyst: it is therefore linear low-density metallocene polyethylene (mLLDPE).

As explained above, the central layers (core layers) of the multilayer film according to the present invention comprise at least one polyethylene with density between 0.850 and 0.915 g/cm³ (VLDPE) and/or a copolymer of ethylene with polar monomers, said copolymer having a glass transition temperature (Tg) lower than -15°C.

As an alternative to VLDPE, the aforementioned polar copolymers of ethylene, such as EVA, EMA, EBA, EAA, EMAA, which have a much greater softness and gumminess, could also be used in the central layers, the higher the comonomer content is (grades with comonomer content greater than 5% by weight are normally available). Thermoplastic copolymers, i.e. elastomers and plastomers in polypropylene matrix, or styrene matrix, which are obtained in mixture or with specific polymerization (for example by means of the gas phase polymerization process called Catalloy), could also be used for the purpose, always in the central layers.

All these solutions concerning the choice of copolymers to be used in the central layers must necessarily ensure a glass transition temperature lower than -15°C, preferably lower than -25°C, and at the same time not excessively penalize transparency.

A further distinguishing feature of the multilayer polymeric film of the invention is the limited thickness of all the layers composing it, whereby the total thickness of the polymeric film is lower than 200 µm, preferably lower than 150 µm. The manufacture of the aforementioned film in the lowest possible thickness is part of the objectives of the European Green Deal towards a packaging design aimed at reducing waste and rejects derived therefrom (reference is made to the ***"prevention"*** among the actions provided for by the Packaging and Packaging Waste Directive).

In this perspective, the invention subject-matter of this patent application is strongly innovative with respect to the known solutions (for example, the patents cited in the state of the art), where the total thickness of the parts constituting the protective covers for cars are of the order of magnitude of the millimetre.

In accordance with a preferred embodiment of the invention, the central layers (core layers) of the multilayer polymeric film have a thickness that is greater than 30% of the total thickness of the film.

Furthermore, the particular use of the multilayer films of the present invention as transparent films integrated within protective covers for cars, makes it necessary that they be able to withstand exposure to solar radiation even for prolonged periods without the radiation itself causing photochemical degradation of the polymer and premature disintegration of the film.

It is therefore appropriate that one or more layers, both external and central, of the transparent polymeric film are added with one or more UV anti-radiation agents selected from stabilizers, such as for example the so-called HALS (Hindered Amine Light Stabilizers) and UV absorbers. The HALS stabilizers are chemical compounds containing an amine functional group, widely used in the field of plastic materials. They are typically compounds derived from tetramethylpiperidine and protect polymers from photo-oxidation-related adverse effects.

The anti-UV addition must be such as to ensure adequate resistance to UV radiation (resistance required for at least 1 year of exposure under radiation conditions in Florida), without however compromising the transparency of the polymeric film, as some anti-UV agents penalize the optical properties of the film.

Finally, as an integral part of the film subject-matter of the present invention, any additives added in one or more layers with the purpose of facilitating the extrusion of the film itself (e.g. process aids, lubricants, antioxidants) or the subsequent processing suitable to achieve the finished cover (antiblocking, glidants, etc.) must be included.

To sum up, the multilayer polymeric film of the present invention is particularly innovative and advantageous compared to those conventionally employed in the protective cover of cars, in that it possesses the combination of the following specific properties:
A) High transparency, so it allows driving the car for short stretches without removing the protective cover from the car;
B) Excellent resistance to shocks and stresses even at very low temperatures (even below -20°C), so the cars can be kept outdoors in storage yards for many months, and can also travel thousands of kilometres at high speed in regions with very cold winter;
C) Excellent resistance to ultraviolet radiation, so that the polymeric film does not degrade due to prolonged exposure to the sun;
D) Weldability with PP spunbond fabrics, so that the transparent polymeric film is easily joined to the rest of the protective cover firmly and tenaciously.

Thanks to the advantageous combination of properties listed above, the multilayer polymeric films of the invention have proved particularly suitable to be integrated into a protective cover so as to overlap the glass parts of said cars.

As mentioned above, a second object of the invention refers to a protective cover for cars comprising, in addition to the transparent polymeric films defined above, polypropylene spunbond films suitable to be superimposed on the body surfaces of said cars.

According to a preferred embodiment of the protective cover in question, the multilayer polymeric films of the invention are joined by heat sealing to the polypropylene spunbond films to make the cover itself.

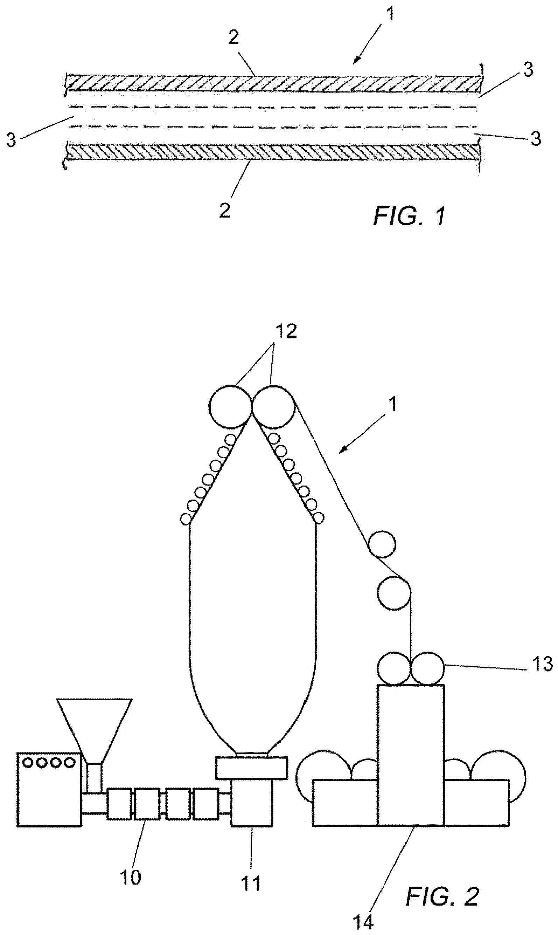

The multilayer polymeric film in accordance with the invention can be obtained by a bubble extrusion technique which will be briefly described with reference to the attached Figures 1 and 2, which are to be considered merely exemplary, and therefore non-limiting, of the multilayer film and the relative process for obtaining it.

Figure 1 schematically illustrates by way of non-limiting example a polymeric film of the invention in the specific case where it is composed of five layers, and therefore three central layers and two external layers.

Figure 2 shows a schematic view of a bubble extrusion plant used for the preparation of the polymeric film in accordance with the invention.

The multilayer polymeric film 1, illustrated in fig. 1, consists of two external layers 2 and of three central layers 3 having the polymeric compositions specified in the claims attached to the present patent application.

The polymeric film 1 of the present invention is preferably made according to the bubble extrusion process and plant described in Italian patent application No. 102017000085388 on behalf of the Applicant. Such a bubble extrusion plant is schematically shown in fig. 2.

With reference to Figure 2, bubble extrusion takes place using one or more extruders 10, depending on the number of layers required for the polymeric film. The extruders 10 are fed with granules of ethylene-based copolymers with regard to the external layers (skin layers), and with granules of a polyethylene VLDPE (Tg lower than -15°C) with regard to the central layers (core layers).

Figure 2 depicts a single extruder for simplicity of illustration, and is indicated with reference numeral 10. The bubble extrusion plant is an equipment known per se that generally consists of an endless screw that conveys the molten material into an annular extrusion head 11, which can be fed simultaneously by several extruders 10, each fed with a respective pre-selected polymeric material to form the relative layer of the multilayer film 1.

Since the bubble extrusion equipment is per se known in the art, we will not enter into the merits of its operation, nor into that of the relative nip-rolls 12 that cause the flattening of the bubble to form the flat multilayer film 1. In such extrusion equipment, the polymeric film undergoes a certain swelling, the extent of which is indicated by the technical term BUR (*"blow up ratio"*): the BUR represents the numerical ratio between the diameter of the bubble film (at its widest point) and the diameter of the annular extrusion head 11 from which the bubble originates.

This stretching ratio influences the mechanical properties of the film that is made because it determines the greater or lesser orientation of the polymer chains both in the machine direction and in the transverse direction. The greater the BUR (the wider the bubble), the greater the stretch in a transverse direction and consequently the film is bioriented and the properties are balanced in both directions.

The multilayer film 1 exiting the nip-rolls 12 is then fed to a sequence of return rollers 13, and finally to a film winding calender 14.

The present invention is not limited to the particular embodiments previously described and illustrated in the accompanying drawings, but numerous modifications can be made to it in detail, within the reach of the person skilled in the art, without thereby departing from the scope of the invention itself, as defined in the appended claims.

## Claims

1. Transparent multilayer polymeric film suitable to be integrated into a protective cover for cars, said polymeric film comprising:
- external layers (skin layers) comprising one or more of the following plastic materials: linear copolymers of ethylene having a density between 0.850 and 0.960 g/cm³, copolymers of ethylene with polar monomers;
- one or more central layers (core layers) comprising at least one polyethylene with density between 0.850 and 0.915 g/cm³ (VLDPE) and/or a copolymer of ethylene with polar monomers, said copolymer having a glass transition temperature lower than -15°C;
said polymeric film having a thickness lower than 200 µm and high transparency with Haze values lower than 40%.

2. Multilayer polymeric film according to claim 1, **characterized in that** said linear copolymers of ethylene comprise a comonomer selected from butene, hexene, octene, the copolymerization being carried out in the presence of a catalyst based on metallocene compounds.

3. Multilayer polymeric film according to any one of claims 1-2, **characterized in that** said linear copolymers of ethylene have a density between 0.900 and 0.930 g/cm³.

4. Multilayer polymeric film according to claim 1, **characterized in that** said copolymers of ethylene with polar monomers are selected from ethylene vinyl acetate (EVA), ethylene methyl acrylate (EMA), ethylene butyl acrylate (EBA), ethylene acrylic acid (EAA), ethylene methacrylic acid (EMAA).

5. Multilayer polymeric film according to any one of claims 1-4, **characterized in that** the thickness is lower than 150 µm and the Haze values are lower than 35%.

6. Multilayer polymeric film according to any one of the preceding claims, **characterized in that** one or more external and/or central layers of said film are added with one or more UV anti-radiation agents selected from stabilizing compounds containing an amino functional group (HALS).

7. Protective cover for cars comprising one or more transparent multilayer polymeric films according to claims 1 to 6, said multilayer polymeric films being integrated into said protective cover so as to overlap the glass parts of said cars.

8. Protective cover according to claim 7 further comprising polypropylene spunbond films suitable to be superimposed on the body surfaces of said cars.

9. Protective cover according to any one of claims 7-8, **characterized in that** said multilayer polymeric films and said polypropylene spunbond films are joined together by heat sealing.

10. Use of one or more multilayer polymeric films according to any one of claims 1 to 6 for the manufacture of protective covers for cars.
